# EUROPÄISCHE PATENTSCHRIFT

(11) **EP 3 323 257 B1**
(45) Veröffentlichungstag und Bekanntmachung des Hinweises auf die Patenterteilung: **27.01.2021**
(21) Anmeldenummer: 16742205.4
(22) Anmeldetag: 13.07.2016
(51) Int. Cl.: H04W 8/00, H04W 24/02, H04W 84/14

(54) **AUFBAU UND AUFRECHTERHALTUNG EINES NETZWERKES**
SETTING UP AND MAINTAINING A NETWORK
CRÉATION ET MAINTENANCE D'UN RÉSEAU

(30) Priorität: 14.07.2015 DE 102015111405
(43) Veröffentlichungstag der Anmeldung: 23.05.2018
(73) Patentinhaber: M-way Solutions Gmbh, 70191 Stuttgart (DE)
(72) Erfinder: HEIL, Marius, 70565 Stuttgart (DE)
(74) Vertreter: Herrmann, Jochen
(86) Internationale Anmeldenummer: PCT/EP2016/066605
(87) Internationale Veröffentlichungsnummer: WO 2017/009366

(56) Entgegenhaltungen:
- WO-A2-2015/054501
- DE-A1-102012 205 355
- US-A1- 2002 103 893
- US-A1- 2007 280 137
- US-A1- 2013 003 630
- "Specification of the Bluetooth System, Specification Volume 6", , 30. Juni 2010 (2010-06-30), Seiten 2165-2300, XP055016390, Gefunden im Internet: URL:www.bluetooth.com [gefunden am 2012-01-12]
- LEE TAEYOUNG ET AL: "Multi-connectivity strategy for agile service delivery with low power discovery", 2014 IEEE 25TH ANNUAL INTERNATIONAL SYMPOSIUM ON PERSONAL, INDOOR, AND MOBILE RADIO COMMUNICATION (PIMRC), IEEE, 2. September 2014 (2014-09-02), Seiten 2071-2075, XP032789616, DOI: 10.1109/PIMRC.2014.7136513 [gefunden am 2015-06-25]
- LIU JIA ET AL: "Energy Analysis of Device Discovery for Bluetooth Low Energy", 2013 IEEE 78TH VEHICULAR TECHNOLOGY CONFERENCE (VTC FALL), IEEE, 2. September 2013 (2013-09-02), Seiten 1-5, XP032548414, ISSN: 1090-3038, DOI: 10.1109/VTCFALL.2013.6692181 [gefunden am 2013-12-22]

## Beschreibung

Die Erfindung betrifft ein Verfahren zum Aufbau und zur Aufrechterhaltung eines Netzwerkes mit zwei oder mehreren Teilnehmern, basierend auf Funk-Verbindungen zwischen den Teilnehmern nach einem Bluetooth Low Energy Standard (BLE), gemäß dem Oberbegriff des Anspruchs 1.

Die Erfindung betrifft weiterhin einen elektronischen Teilnehmer eines BLE-Netzwerks mit zwei oder mehreren elektronischen Teilnehmern gemäß dem Oberbegriff des Anspruchs 5.

Ein Verfahren bzw. ein elektronischer Teilnehmer der eingangs genannten Art sind bspw. aus der US 2007/ 280 137 A1 bekannt. Aus der "Specification of the Bluetooth System, Specification Volume 6", 30. Juni 2010, Seiten 2165-2300 ist der herkömmliche BLE-Standard für Funk-Netzwerke bekannt. In Lee Taeyoung et al.: "Multiconnectivity strategy for agile service delivery with low power discovery", 2014, 25th Annual International Symposium on Personal, Indoor, and Mobile Radio Communication (PIMRC), IEEE, 2. September 2014, Seiten 2071-2075 ist der Aufbau eines Funk-Netzwerks anhand eines modifizierten BLE-Discovery Algorithmus beschrieben. Die US 2013/ 003 630 A1 beschreibt ein ad-hoc Funk-Netzwerk nach dem herkömmlichen BLE-Standard. Aus der US 2002/ 103 893 A1 ist ebenfalls der Aufbau und die Aufrechterhaltung eines ad-hoc Funk-Netzwerks bekannt, das jedoch nicht nach dem BLE-Standard arbeitet.

Mit Bluetooth Low Energy (Bluetooth LE bzw. BLE) ist ein Standard zur Datenübertragung zwischen elektronischen Geräten auf Funkbasis geschaffen, bei dem insbesondere ein geringer Energieverbrauch im Vordergrund steht. Er eignet sich somit bevorzugt für batterie- oder akkubetriebene Geräte. Die Übertragung erfolgt auf 40 Kanälen bei 2,4 GHz im ISM-Band. Die Kanäle sind dabei in Advertising- und Data-Kanäle aufgeteilt. Zum Aufbau einer BLE-Verbindung zwischen zwei elektronischen Teilnehmern und zum Versenden von Broadcasts werden die Advertising-Kanäle verwendet, während die Übertragung größerer Datenmengen über die Data-Kanäle erfolgt. Zum Aufbau einer Verbindung werden permanent Advertising-Pakete verschickt bzw. es wird permanent nach Advertising-Paketen gesucht, was zu einem vergleichsweise hohen Energieverbrauch führt.

Geräte mit BLE Schnittstellen können zu Piconets verschaltet werden, bei denen ein Teilnehmer als Master mit einem oder mehreren als Slave fungierenden weiteren Teilnehmern verbunden ist. Nachteilig hierbei ist, dass der Master über größere Ressourcen verfügen muss. Dies betrifft die Hardware, aber auch die Energieversorgung, um die Verbindungen zu den weiteren Teilnehmern des Piconets aufzubauen und aufrecht zu erhalten.

Beacons sind kleine, zumeist batterie- bzw. akkubetriebene elektronische Geräte zum Übertragen von Daten, vorzugsweise nach dem Bluetooth LE Standard. Es sind jedoch auch Beacons mit anderen Energieversorgungen, beispielsweise an das Spannungsnetz angeschlossene Beacons, bekannt. Beacons können für eine Vielzahl von Anwendungen konzipiert sein. Sie finden Verwendung bei Sensoren, beispielsweise bei Temperatursensoren, zur Übertragung von Messsignalen, als Signalgeber für Ortungsfunktionen (z.B. iBeacon der Fa. Apple), als Sender von Daten, beispielsweise von Werbung, zur Lenkung großer Besucherströme, beispielsweise in Stadien, zur Informationsübertragung, beispielsweise in Museen und Ausstellungen, und vieles mehr. Der Bluetooth LE Standard ermöglicht dabei einen bidirektionalen Datenaustausch. Nachteilig ist, dass Beacons zumeist nur über einen sehr geringen Energievorrat und sonstige Ressourcen (Sendeleistung, Reichweite, Rechenleistung, Speichervermögen etc.) verfügen. Sie eignen sich daher nicht als Verbindungskoordinator in einem Netzwerk.

Es ist daher Aufgabe der Erfindung, ein Verfahren, welches einen Aufbau und eine Aufrechterhaltung eines Netzwerkes mit elektronischen Teilnehmern mit geringen Energieressourcen auf Basis von BLE-Verbindungen ermöglicht, bzw. einen entsprechenden elektronischen Teilnehmer bereitzustellen.

Die das Verfahren betreffende Aufgabe der Erfindung wird durch die Merkmale des Anspruchs 1 gelöst. Die den elektronischen Teilnehmer betreffende Aufgabe der Erfindung wird durch die Merkmale des Anspruchs 5 gelöst.

Durch die Erfindung wird es möglich, ein Mesh-Netzwerk ohne einen zentral angeordneten Verbindungskoordinator aufzubauen. Damit kann das Netzwerk mit Teilnehmern gebildet werden, die nur über sehr geringe Ressourcen verfügen. Insbesondere ermöglicht das Verfahren, ein Netzwerk mit batterie- oder akkubetriebenen Teilnehmern mit geringer Akku- oder Batteriekapazität aufzubauen und über lange Zeiträume zu betreiben. Durch das erfindungsgemäße Verfahren werden kleinere Cluster aufgelöst, während größere Cluster wachsen, bis alle Teilnehmer in einem Cluster und somit einem Netzwerk verbunden sind.

Gängige Implementierungen eines Bluetooth Low Energy Standards erlauben nur einen Eingang und mehrere, beispielsweise drei, Ausgänge zum Aufbau von BLE-Verbindungen (Bluetooth Low Energy Standard 4.1, Version 1.0). Die Begrenzung auf einen Eingang ist vorteilhaft, da ein über den Eingang verbundener und damit als Slave betriebener Teilnehmer den Verbindungsparametern des mit dem Eingang verbundenen Masters folgen muss, was letztendlich nur für einen Master effizient möglich ist. Das Verfahren ermöglicht den Aufbau einer BLE-Netzwerkverbindung zwischen zwei Teilnehmer, deren Eingänge bereits belegt sind. Dazu trennt zunächst der ausgewählte Teilnehmer seine Verbindungen zu seinem Cluster und verbindet sich anschließend mit dem Teilnehmer, der ihn zum Aufbau einer BLE-Netzwerkverbindung ausgewählt hat. Vorteilhaft kann es vorgesehen sein, dass jedes Cluster eindeutig über eine Cluster-Kennung (Cluster-ID) gekennzeichnet ist und dass eine neue BLE-Netzwerkverbindung nur zwischen zwei Teilnehmern unterschiedlicher Cluster aufgebaut wird. Ringvernetzungen können so vermieden werden und es ergibt sich eine einfache Baumstruktur für das erhaltene Netzwerk. Als Cluster-Kennung (Cluster-ID) kann vorzugsweise die Cluster-Kennung des Teilnehmers, der die erste BLE-Netzwerkverbindung des vorliegenden Clusters aufgebaut hat, verwendet werden.

Entsprechend einer bevorzugten Ausführungsvariante der Erfindung kann es vorgesehen sein, dass vor Aufbau einer BLE-Netzwerkverbindung Kennungs-Daten (Join-Me-Paket) zwischen Teilnehmern vorliegender Cluster versendet werden, dass die Kennungs-Daten zumindest die Teilnehmer-Kennung (Node-ID) und/oder die Anzahl freier Eingänge und/oder die Anzahl freier Ausgänge eines jeweiligen Teilnehmers und/oder die Cluster-Kennung (Cluster-ID) und/oder eine Clustergröße des Clusters, dem der jeweilige Teilnehmer zugehört, enthalten, dass empfangende Teilnehmer aus den von verschiedenen Teilnehmern zugesandten Kennungs-Daten für jeden dieser Teilnehmer eine Bewertungszahl (Connection Score) bestimmen und dass ein Teilnehmer eines größeren Clusters auf Basis der Bewertungszahl (Connection Score) einen Teilnehmer eines kleineren Clusters zum Aufbau einer BLE-Netzwerkverbindung auswählt oder dass bei gleich großen Clustern in Abhängigkeit von der jeweiligen Cluster-Kennung (Cluster-ID) und/oder der jeweiligen Teilnehmer-Kennung (Node-ID) ein Teilnehmer festgelegt wird, der auf Basis der Bewertungszahl (Connection Score) einen zweiten Teilnehmer zum Aufbau der Netzwerk-Verbindung auswählt.

Die Kennungs-Daten können mittels bei Bluetooth Low Energy Anwendungen vorgesehenen Advertising Paketen versendet werden. Die Bewertungszahl kann dann, beispielsweise mittels einer Funktion (Cluster Score Function), aus den Kennungs-Daten bestimmt werden. Dem Teilnehmer des größeren Clusters obliegt die Auswahl des Verbindungspartners. Mit Hilfe der Bewertungszahl können die Teilnehmer den geeignetsten Verbindungspartner auswählen und eine BLE-Netzwerkverbindung mit diesem eingehen. Sind beide Cluster gleich groß kann es vorgesehen sein, dass an Hand der Cluster-Kennung (Cluster-ID) entschieden wird, welche Teilnehmer über den Aufbau einer BLE-Netzwerkverbindung entscheiden können.

Wesentlich für den Aufbau des Netzwerkes ist die Kenntnis der Clustergröße. Diese wird vorzugsweise in jedem Teilnehmer eines Clusters gespeichert. Wird ein neuer Teilnehmer mit dem Cluster verbunden, kann die Clustergröße um eins erhöht und die neue Clustergröße an die übrigen Teilnehmer des Clusters gesendet werden.

Entsprechend einer weiterführenden Ausführungsform der Erfindung kann es vorgesehen sein, dass die Bewertungszahl (Connection Score) einen Wert einnimmt, der eine BLE-Netzwerkverbindung verhindert, wenn der die Kennungs-Daten (Join-Me-Paket) sendende Teilnehmer dem gleichen Cluster angehört wie der die Kennungs-Daten empfangende und bewertende Teilnehmer und/oder wenn der sendende Teilnehmer einem größeren Cluster angehört als der empfangende und bewertende Teilnehmer. Entsprechend kann es vorgesehen sein, dass die Bewertungszahl (Connection Score) einen Wert einnimmt, der einer hohen Bewertung einer möglichen BLE-Netzwerkverbindung entspricht, wenn der sendende Teilnehmer einen freien Eingang aufweist und wenn der sendende Teilnehmer nicht dem gleichen Cluster oder einem größeren Cluster angehört. Es wird dann eine Verbindung ermöglicht, bei der der auswählende Teilnehmer als Master und der ausgewählte Teilnehmer als Slave geschaltet ist.

Ebenfalls möglich ist es, dass bei der Ermittlung der Bewertungszahl eine Signalstärke des von einem zu bewertenden Teilnehmer empfangenen Signals berücksichtigt wird. Dies kann beispielsweise in Form eines Received Signal Strength Index (RSSI) erfolgen. Es werden dann bevorzugt BLE-Netzwerkverbindungen zu Teilnehmern, von denen eine hohe Signalstärke vorliegt, eingerichtet. Weiterhin ist es möglich, dass bei der Ermittlung der Bewertungszahl eine Batterielaufzeit und/oder der Gerätetyp übermittelt wird und zur Bestimmung der Bewertungszahl verwendet wird. Hierdurch kann erreicht werden, dass bevorzugt Verbindungen zu Teilnehmern eingerichtet werden, die hohe Batterieressourcen besitzen und/oder einer bestimmten Geräteklasse angehören.

Vor dem Aufbau einer BLE-Netzwerkverbindung müssen sich Teilnehmer zunächst gegenseitig erkennen und einen möglichen Verbindungsaufbau bewerten. Daher kann es vorgesehen sein, dass während einer Auffindungs-Phase (Discovery) des Netzwerkaufbaus die Teilnehmer fortwährend Verbindungsdaten mit ihren Kennungs-Daten (Join-Me-Paket) senden und Verbindungsdaten mit Kennungs-Daten von sendenden Teilnehmer empfangen, dass empfangende Teilnehmer die jeweils zuletzt empfangenen Kennungs-Daten der sendenden Teilnehmer speichern und dass die Häufigkeit der Aussendung von Verbindungsdaten und/oder der Suche nach zu empfangenden Verbindungsdaten reduziert oder beendet wird, wenn die empfangenen Kennungs-Daten alle die gleiche Cluster-Kennung (Cluster-ID) aufweisen. Das Senden von bzw. das Scannen nach Daten führt zu einem hohen Energieverbrauch. Während der Auffindungs-Phase ist es jedoch erforderlich, häufig zu Senden bzw. zu Scannen, um in Reichweite befindliche Teilnehmer schnell zu erkennen und Verbindungen aufzubauen. Sind alle erreichbaren Teilnehmer miteinander verbunden, weisen sie alle die gleiche Cluster-Kennung (Cluster-ID) auf. Vorteilhaft kann dann die Häufigkeit der Aussendung von bzw. die Suche nach zu empfangenden Verbindungsdaten reduziert werden. Dadurch kann Energie eingespart und die Betriebsdauer akku- oder batteriebetriebener Teilnehmer deutlich verlängert werden. Bei reduzierter Sende- bzw. Empfangshäufigkeit können neue Teilnehmer, ggf. mit einer akzeptierten Verzögerung, gefunden und in das Netzwerk integriert werden. Wird das Senden von bzw. das Suchen nach Verbindungsdaten vollständig eingestellt, kann der Energieverbrauch weiter reduziert werden, es können jedoch keine neuen Teilnehmer erkannt und aufgenommen werden. Entsprechend einer weiteren Ausführungsform der Erfindung kann es vorgesehen sein, dass nach einer erfolgten Unterbrechung einer BLE-Netzwerkverbindung die Sende- und Empfangshäufigkeit für Verbindungsdaten wieder erhöht wird, um eine erneute Verbindung zu dem verlorenen Teilnehmer zu ermöglichen.

Entsprechend einer besonders bevorzugten Erfindungsausgestaltung kann es vorgesehen sein, dass zumindest ein Beacon als Teilnehmer verwendet wird. Beacons sind kleine, zumeist batterie- oder akkubetriebene und Bluetooth-fähige Geräte mit vielfältigen Einsatzmöglichkeiten, beispielsweise als Sensoren, als Datensender zur gezielten Werbung oder zur Navigation und vieles mehr. Das gebildete Mesh-Netzwerk eignet sich besonders für diese Art von Teilnehmern, welche lediglich über geringe Energie- und Hardware-Ressourcen verfügen.

Um auch bei Unterbrechung einer BLE-Netzwerkverbindung die korrekte Clustergröße bestimmen zu können kann es in einer weiterführenden Ausführung der Erfindung vorgesehen sein, dass je Eingang und Ausgang eines Teilnehmers die Anzahl der Teilnehmer in einem Ast des Netzwerkes, der mit dem jeweiligen Eingang oder Ausgang verbunden ist, von dem Teilnehmer gespeichert wird (Connected Cluster Size), dass der Zähler (Cluster Size) um die Anzahl der Teilnehmer in dem Ast (Connected Cluster Size) reduziert wird, wenn eine BLE-Netzwerkverbindung zu dem Ast unterbrochen wird und dass der neue Wert des Zählers (Cluster Size) an die weiteren Teilnehmer des Clusters gesendet wird. Vorteilhaft kann dieser neue Wert als relative Änderung zum alten Wert gesendet werden, um eventuelle Nebenläufigkeitsprobleme zu vermeiden. Dabei kann es weiterhin vorteilhaft vorgesehen sein, dass bei einer Unterbrechung einer BLE-Netzwerkverbindung dem kleineren gebildeten Cluster eine neue Cluster-Kennung (Cluster-ID) zugeordnet wird.

Zur Initialisierung der Teilnehmer kann es weiterführend vorgesehen sein, dass während einer ersten Phase (Node Initialisation) des Netzwerkaufbaus einem noch nicht mit einem weiteren Teilnehmer verbundener Teilnehmer seine Teilnehmer-Kennung (Node-ID) zugewiesen wird, dass auf Basis dieser Teilnehmer-Kennung (Node-ID) eine Cluster-Kennung (Cluster-ID) erzeugt wird und/oder dass dem nicht verbundenen Teilnehmer eine Clustergröße (Cluster Size) von eins zugewiesen wird und/oder dass für den nicht verbundenen Teilnehmer die Anzahl der je Eingang und je Ausgang verbundenen Teilnehmer (Connect Cluster Size) auf null gesetzt wird. Den Teilnehmern liegen so zu Beginn des Netzwerkaufbaus alle Informationen vor, um sich mit weiteren Teilnehmern zu verbinden.

Um zu ermöglichen, dass mehrere räumlich überlappende Netzwerke in einem physikalischen Raum aufgebaut werden können, kann es in einer weiterführenden Ausführung der Erfindung vorgesehen sein, dass während der ersten Phase (Node Initialisation) jedem Netzwerk eine Netzwerk-Kennung (Network-ID) zugeordnet und in den bereits verbundenen oder zu verbindenden Teilnehmern des jeweiligen Netzwerkes gespeichert wird.

Der elektronische Teilnehmer ist dazu ausgebildet, mit den weiteren Teilnehmern mittels BLE-Netzwerkverbindungen ein Netzwerk aufzubauen und die Häufigkeit der Aussendung von Verbindungsdaten und/oder der Suche nach Verbindungsdaten zu reduzieren oder die Aussendung von Verbindungsdaten und/oder die Suche nach Verbindungsdaten einzustellen, wenn die in Reichweite einer bidirektionalen BLE-Verbindung befindlichen Teilnehmer in dem Netzwerk integriert sind. Durch die Reduzierung der Häufigkeit, mit der Verbindungsdaten ausgesendet oder gescannt werden, kann der Energieverbrauch des Teilnehmers deutlich gesenkt werden. Es können so Netzwerke mit zumindest einem oder vorzugsweise mehreren Teilnehmern aufgebaut werden, die auch bei den begrenzten Energieressourcen des Teilnehmers eine lange Betriebszeit aufweisen.

Der Aufbau eines Mesh-Netzwerkes kann dadurch erfolgen, dass der Teilnehmer dazu ausgebildet ist, alleine oder zusammen mit zumindest einem weiteren über eine BLE-Netzwerkverbindung verbundenen Teilnehmer ein erstes Cluster zu bilden, dass der Teilnehmer dazu ausgebildet ist, einen zweiten Teilnehmer aus einem kleineren oder gleich großen zweiten Cluster auszuwählen und zu veranlassen, dass dieser seine BLE-Netzwerkverbindungen zu Teilnehmern des zweiten Clusters unterbricht und dass der Teilnehmer dazu ausgelegt ist, eine BLE-Netzwerkverbindung zu dem zweiten Teilnehmer aufzubauen.

Der elektronische Teilnehmer ist vorzugsweise als ein Beacon ausgebildet. Vorzugsweise kann es vorgesehen sein, dass in dem Beacon eine eindeutige Teilnehmer-Kennung (Node-ID) und/oder eine eindeutige Cluster-Kennung (Cluster-ID) und/oder eine eindeutige Netzwerk-Kennung (Network-ID) und/oder eine Clustergröße (Cluster Size) des Clusters, dem der Beacon zugehört, und/oder die Anzahl der Teilnehmer in einem Ast des Netzwerkes, der mit einem jeweiligen Eingang oder Ausgang des Beacons verbunden ist (Connected Cluster Size), gespeichert ist. Die Daten können so zum Aufbau und zur Aufrechterhaltung des Netzwerkes verwendet werden.

Entsprechend einer besonders bevorzugten Ausgestaltungsvariante der Erfindung kann es vorgesehen sein, dass der Beacon dazu ausgelegt ist, als Verbindungsdaten oder als Teil der Verbindungsdaten Kennungs-Daten (Join-Me-Paket) an weitere Teilnehmer zu versenden und Kennungs-Daten von diesen zu empfangen und dass die Kennungs-Daten zumindest die Teilnehmer-Kennung (Node-ID) und/oder die Anzahl freier Eingänge und/oder die Anzahl freier Ausgänge des Beacons und/oder die Cluster-Kennung (Cluster-ID) und/oder die Clustergröße (Cluster Size) des Clusters, dem der Beacon oder der weitere Teilnehmer zugehört, enthalten. Den möglichen Teilnehmern eines Netzwerkes liegen somit die Daten vor, die zum Aufbau einer BLE-Netzwerkverbindung zwischen zwei Teilnehmern erforderlich ist.

Vorzugsweise kann der Beacon dazu ausgelegt sein, aus den empfangenden Kennungs-Daten (Join-Me-Paket) mit Hilfe einer in dem Beacon hinterlegten Funktion (Cluster Score Funktion) für jeden der Teilnehmer, deren Kennungs-Daten von dem Beacon empfangen wurden, eine Bewertungszahl (Connection Score) zu bestimmen und dass der Beacon dazu ausgelegt ist, an Hand der Bewertungszahl einen Teilnehmer zum Aufbau einer BLE-Netzwerkverbindung auszuwählen. Der Beacon kann so einfach und schnell entscheiden, mit welchem weiteren Teilnehmer, z.B. mit welchem weiteren Beacon, er vorzugsweise eine BLE-Netzwerkverbindung aufnehmen möchte und diese dann entsprechend einrichten. Durch die Berücksichtigung der Cluster-Kennung (Cluster-ID) kann sicher vermieden werden, dass sich Teilnehmer eines gleichen Clusters miteinander verbinden. Somit können Mehrfachverbindungen in einem Cluster und in einem Netzwerk vermieden werden. Entsprechend einer möglichen Erfindungsausgestaltung kann es weiterhin vorgesehen sein, dass bei der Auswahl eines Teilnehmers zum Aufbau einer BLE-Netzwerkverbindung eine Signalstärke des empfangenen Funksignals des ausgewählten Teilnehmers berücksichtigt wird. Dies kann beispielsweise durch Berücksichtigung eines Received Signal Strength Index (RSSI) erfolgen. Es werden dann bevorzugt BLE-Netzwerkverbindungen zu Teilnehmern, von denen eine hohe Signalstärke vorliegt, eingerichtet.

Der Beacon lässt sich bevorzugt zur Durchführung des beschriebenen Verfahrens verwenden.

Die Erfindung wird im Folgenden anhand eines in den Zeichnungen dargestellten Ausführungsbeispiels näher erläutert. Es zeigen
Fig. 1 einen Ablaufplan zum Aufbau eines Netzwerkes,
Fig. 2 ein Cluster eines Netzwerkes,
Fig. 3 noch nicht vernetzte Teilnehmer eines zu bildenden Netzwerkes,
Fig. 4 die in Figur 3 gezeigten, zum Teil vernetzten Teilnehmer,
Fig. 5 die in Figur 4 gezeigten weiter vernetzten Teilnehmer,
Fig. 6 ein Netzwerk mit den vollständig vernetzten Teilnehmern aus Figur 5 und
Fig. 7 zwei unterschiedlich große Cluster während des Aufbaus eines Netzwerkes.

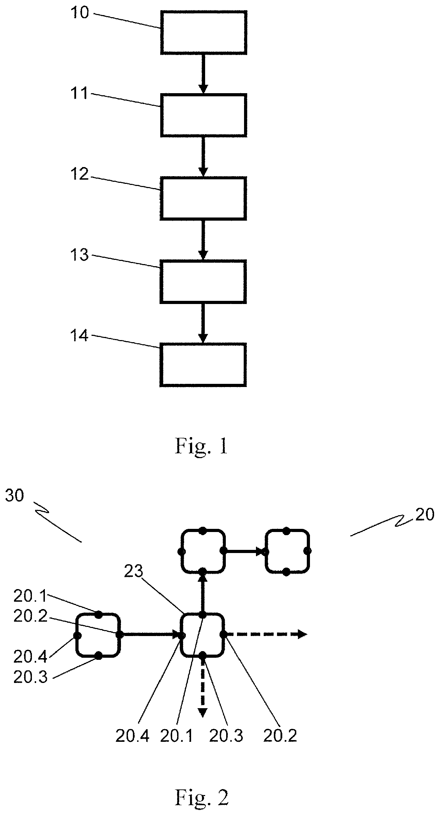

Figur 1 zeigt einen Ablaufplan zum Aufbau eines Netzwerkes. Der Ablaufplan sieht aufeinanderfolgend eine Phase Node Initialisation 10, eine Phase Discovery 11 (Auffindungs-Phase), eine Phase Route Setup 12, eine Phase Route Maintenance 13 und eine Phase Routing 14 vor. Das Netzwerk wird mit in den Figuren 2 bis 7 gezeigten Teilnehmern 20 auf Basis von Bluetooth Low Energy-Verbindungen (BLE-Verbindungen) aufgebaut. Bei den Teilnehmern 20 kann es sich um gleichartige oder unterschiedliche elektronische Bauteile handeln. In dem gezeigten Ausführungsbeispiel ist zumindest einer der Teilnehmer als Beacon 23, wie er in Figur 2 gezeigt ist, ausgeführt. Die einzelnen Phasen können mehrfach und auch in abweichenden Reihenfolgen durchlaufen werden.

Während der Phase Node Initialisation 10 werden den Teilnehmern 20, bevor sie sich mit dem Netzwerk verbinden, eine eindeutige Teilnehmer-Kennung (Node-ID) und eine Netzwerk-Kennung (Network-ID) zugewiesen. Vorzugsweise wird den Teilnehmern 20 auch ein Schlüssel zum Verschlüsseln von Daten zugewiesen. Die Netzwerk-Kennung (Network-ID) ermöglicht es, mehrere räumlich überlappende Netzwerke zu betreiben. Basierend auf den Teilnehmer-Kennungen (Node-ID) generieren die Teilnehmer 20 Cluster-Kennungen (Cluster-ID). Eine Clustergröße (Cluster Size) wird für jeden Teilnehmer (20, 21, 22, 25, 26, 27) auf den Anfangswert eins gesetzt.

Wie in Figur 2 gezeigt, weist ein Teilnehmer 20 bei der verwendeten Bluetooth LE-Implementierung drei Ausgänge 20.1, 20.2, 20.3 und einen Eingang 20.4 auf. Ein Wert, der die Anzahl der Teilnehmer 20 in einem Ast des Netzwerkes, der mit einem jeweiligen Eingang 20.4 oder Ausgang 20.1, 20.2, 20.3 des Teilnehmers 20 verbunden ist (Connected Cluster Size), angibt, wird für alle Eingänge 20.4 und Ausgänge 20.1, 20.2, 20.3 der Teilnehmer 20 auf null gesetzt. Die so gebildeten Initialwerte werden in den Teilnehmern 20 gespeichert.

Während der Phase Discovery 11 senden die Teilnehmer 20 aufeinanderfolgend Broadcast-Nachrichten in Form von Advertising Paketen aus. Broadcast-Daten sind nicht an einen Teilnehmer 20 adressiert, sondern können von allen Teilnehmer 20 in Reichweite des Senders empfangen werden. Die Advertising-Pakete enthalten Verbindungsdaten. Zwischen dem Senden scannen die Teilnehmer 20 die Advertising-Kanäle, über die die Broadcast-Nachrichten gesendet werden, nach von anderen Teilnehmern 20 gesendeten Verbindungsdaten ab. Die gesendeten Advertising Pakete übermitteln Kennungs-Daten (Join-Me Paket), welche Eigenschaften des sendenden Teilnehmers 20 beschreiben. Diese Eigenschaften ermöglichen es einem empfangenden Teilnehmer 20, den sendenden Teilnehmer 20 bezügliche des Aufbaus einer BLE-Netzwerkverbindung zu bewerten.

Die Kennungs-Daten (Join-Me Paket) enthalten vorzugsweise die Teilnehmer-Kennung (Node-ID), die Anzahl freier Eingänge und die Anzahl freier Ausgänge des sendenden Teilnehmers sowie die Cluster-Kennung (Cluster-ID) und die Clustergröße (Cluster Size) eines in den Figuren 2 bis 7 gezeigten Clusters 30, dem der jeweilige Teilnehmer 20 zugehört. Das Advertising Paket signalisiert eine mögliche Verbindung, wenn ein Eingang des sendenden Teilnehmers frei ist. Ist der Eingang belegt, signalisiert das Advertising Paket, dass keine unmittelbare Verbindung möglich ist.

Empfangene Advertising Pakete mit Kennungs-Daten werden von dem jeweiligen Teilnehmer 20 in einem Puffer gespeichert. Dabei werden bei wiederholt von einem sendenden Teilnehmer 20 empfangenen Kennungs-Daten ältere Daten mit den neueren überschrieben und vorzugsweise die Empfangszeit mit abgespeichert.

Nach einer vorgegebenen Dauer der Phase Discovery 11 werden in der Phase Route Setup 12 von den Teilnehmern 20 die jeweils besten Verbindungspartner an Hand der gesammelten Kennungs-Daten (Join-Me Pakete) ermittelt. Für jeden der Teilnehmer 20, dessen Kennungs-Daten vorliegen, wird mit Hilfe einer Funktion (Cluster Score Function) eine Bewertungszahl (Connection Score) ermittelt. Diese Bewertungszahl drückt aus, mit welchem Teilnehmer 20 bevorzugt eine BLE-Netzwerkverbindung aufgebaut werden soll. Die Bewertungszahl erhält einen niedrigen Wert, vorzugsweise null, wenn der sendende Teilnehmer 20 in dem gleichen oder in einem größeren Cluster 30 integriert ist als der empfangende und bewertende Teilnehmer 20. Eine BLE-Netzwerkverbindung mit einem solchen Teilnehmer 20 kann dann von dem bewertenden Teilnehmer 20 nicht initiiert werden. Die Entscheidung über den Aufbau einer Verbindung obliegt somit dem Teilnehmer 20 des größeren Clusters 30. Gehören beide Teilnehmer unterschiedlichen Clustern 30 gleicher Größe an, wird an Hand der Cluster-Kennung (Cluster-ID) und/oder an Hand der Teilnehmer-Kennung (Node-ID) entschieden, welcher Teilnehmer 20 über einen Verbindungsaufbau entscheiden kann.

Nachdem alle Kennungs-Daten ausgewertet sind, versucht der Teilnehmer 20, eine BLE-Netzwerkverbindung zu dem Teilnehmer 20 mit der höchsten Bewertungszahl (Connection Score) herzustellen. Bevorzugt wird ein Teilnehmer 20 dazu einen weiteren Teilnehmern 20 auswählen, der einen freien Eingang 20.4 aufweist, und versuchen, sich mit diesem als Master zu verbinden.

Während des Handshakes tauschen die beiden betroffenen Teilnehmer 20 weiter Daten (Cluster Welcome Paket) mit ihren letzten und damit aktuellen Kennungs-Daten aus. Zeigt sich dabei, dass beide Teilnehmer 20 bereits dem gleichen Cluster 30 angehören, wird die gerade aufgebaute Verbindung wieder unterbrochen. Dadurch kann vermieden werden, dass ein Teilnehmer 20 über mehrere Verbindungen mit dem gleichen Cluster 30 verbunden ist. Ansonsten wird veranlasst, dass der Teilnehmer 20 des kleineren Clusters 30 alle BLE-Netzwerkverbindungen zu dem kleineren Cluster 30 unterbricht. Anschließend wird eine BLE-Netzwerkverbindung zwischen dem auswählenden und dem ausgewählten Teilnehmer 20 aufgebaut. Der neue Teilnehmer 20 speichert seine neue Cluster-Kennung (Cluster-ID) und seine neue Clustergröße (Cluster Size). Diese wurde gegenüber der Clustergröße des größeren Clusters 30 um eins erhöht. Anschließend übersendet der aufgenommene Teilnehmer 20 ein Cluster-ACK Paket, womit er seinen Eingang in das neue Cluster 30 bestätigt. Danach erfolgt eine Nachricht (Cluster-Update Message) an die übrigen Teilnehmer des Clusters 30 mit der neuen Clustergröße. Die Änderung der Clustergröße erfolgt dabei inkrementell. Dies ist vorteilhaft, da zu einem bestimmten Zeitpunkt nicht alle Teilnehmer 20 eines Clusters 30, beispielsweise während eines gerade erfolgenden weiteren Handshakes, die gleiche Clustergröße gespeichert haben.

Wird eine BLE-Netzwerkverbindung unterbrochen, wird die Clustergröße um die Anzahl der verlorenen Teilnehmer 20 reduziert. Auch dies erfolgt inkrementell. Dazu ist es erforderlich, dass jeder Teilnehmer 20 für jeden Ein- bzw. Ausgang 20.1, 20.2, 20.3, 20.4 speichert, wie viele Teilnehmer 20 in dem damit verbundenen Ast enthalten sind (Connected Cluster Size). Um gleiche Cluster-Kennungen (Cluster-ID) zu vermeiden, wird für das kleinere gebildete Cluster 30 auf Basis der Teilnehmer-Kennung (Node-ID) des Teilnehmers 20, dessen Verbindung unterbrochen wurde, eine neue Cluster-Kennung (Cluster-ID) generiert. Das größere Cluster 30 behält seine Cluster-Kennung bei.

Teilnehmer 20 eines größeren Clusters 30 können entscheiden, welche Verbindung sie eingehen. Auf diese Weise werden kleinere Cluster 30 aufgelöst, bis nur noch ein Cluster 30 vorliegt. Es bildet sich so ein vermaschtes Netzwerk (Mesh Network), ohne dass ein übergeordneter Koordinator erforderlich ist.

Nachdem das Netzwerk formiert ist, weisen alle Kennungs-Daten (Join-Me Pakete) die gleichen Cluster-Kennungen (Cluster-ID) auf. Ist dies der Fall, werden während der Phase Route Maintenance 13 die Teilnehmer 20 zu einer verlangsamten Auffindungs-Phase (lower discovery mode) umgeschaltet. Dies erfolgt vorzugsweise, wenn über einen längeren Zeitraum keine Änderungen bei den übermittelten Cluster-Kennungen auftreten. Während der verlangsamten Auffindungs-Phase scannen die Teilnehmer das Netzwerk mit einer niedrigeren Häufigkeit, und sie senden weniger Advertising-Pakete im Vergleich zu der zuvor beschriebenen Phase Discovery 11. Auch ist es denkbar, das Auffinden weiterer Teilnehmer 20 vollständig abzuschalten. Dies hat jedoch den Nachteil, dass neue Teilnehmer 20 nicht mehr gefunden und in das Netzwerk integriert werden. Geht die Verbindung zu einem Teilnehmer 20 verloren, schaltet sein vorheriger Verbindungspartner das Netzwerk zurück in die Phase Discovery mit der entsprechend hohen Sende- und Such-Häufigkeit. Das Netzwerk wird somit Teilnehmer 20, zu denen die Verbindung unterbrochen wurde, neu verbinden. Dabei werden möglicherweise alternative Verbindungsrouten gewählt. Das Netzwerk ist somit selbstheilend. Der getrennte Teilnehmer 20 wird mit hoher Wahrscheinlichkeit am Rand des Netzwerkes neu verbunden. Damit werden Teilnehmer 20, deren Verbindung zum Netzwerk öfter unterbrochen wird, zum Rand des Netzwerkes verschoben, wodurch die Stabilität des Netzwerkes erhöht wird.

Während der Phase Routing 14 können dann Daten über das Netzwerk versendet werden. Dabei können die Daten, wie für Mesh-Netzwerke bekannt, von Teilnehmer 20 zu Teilnehmer 20 bis zum Adressaten weitergeleitet werden. Mögliche Nachrichten sind an alle Teilnehmer 20 gerichtete Broadcast Nachrichten oder Nachrichten zwischen zwei Teilnehmern 20. Es können auch Nachrichten an einen in dem Netzwerk integrierten Verbindungspunkt (Sink oder Gateway) und von dort zu einem anderen Netzwerk gesendet werden oder Nachrichten von dem Verbindungspunkt empfangen werden.

Figur 2 zeigt ein Cluster 30 eines Netzwerkes mit vier Teilnehmern 20. Jeder der Teilnehmer 20 weist drei Ausgänge 20.1, 20.2, 20.3 und einen Eingang 20.4. auf. Die Teilnehmer können so drei Verbindungen als Master und eine Verbindung als Slave eingehen. Ein Teilnehmer ist als Beacon 23 ausgeführt. Dessen Eingang 20.4 ist über eine BLE-Netzwerkverbindung mit einem zweiten Ausgang 20.2 eines vorangeschalteten Teilnehmers 20 verbunden. An dem ersten Ausgang 20.1 des Beacons 23 ist ein Ast mit zwei Teilnehmern 20 angeschlossen. Der zweite und dritte Ausgang 20.2, 20.3 des Beacons 23 ist frei und nicht mit einem weiteren Teilnehmer 20 verbunden.

Dem Beacon 23 und den weiteren dem gezeigten Cluster 30 zugeordneten Teilnehmern 20 sind Kennungs-Daten zugewiesen. Dabei weisen alle diese im Cluster 30 verbundenen Teilnehmer 20 die gleiche Netzwerk-Kennung (z.B. Network-ID: 1), die gleiche Cluster-Kennung (z.B. Cluster-ID: 7001) und die gleiche Clustergröße, im vorliegenden Ausführungsbeispiel Cluster Size: 4, auf. Weiterhin ist jedem Teilnehmer 20 eine eigene Teilnehmer-Kennung, für den Beacon 23 z.B. Node-ID: 7, zugewiesen. Auch ist in jedem Teilnehmer 20 für jeden Ein- bzw. Ausgang 20.1, 20.2, 20.3, 20.4 die Anzahl der daran angeschlossenen Teilnehmer 20 (Connected Cluster Size) hinterlegt. Für den Eingang 20.4 des Beacons 23 ergibt sich im gezeigten Beispiel ein Connected Cluster Size von 1. Dem ersten Ausgang 20.1 des Beacons 23 ist ein Connected Cluster Size von 2 zugeordnet, während dem zweiten und dritten Ausgang 20.2, 20.3 des Beacons 23 jeweils ein Connected Cluster Size von 0 zugewiesen ist. Wird die BLE-Netzwerkverbindung zwischen dem ersten Ausgang 20.1 des Beacons 23 und dem nachfolgenden Teilnehmer 20 unterbrochen, so wird die Clustergröße des verbleibenden Clusters 30 inkrementell entsprechend der dem ersten Ausgang zugeordneten Connected Cluster Size von 2 reduziert. Die neue Clustergröße beträgt dann 2 (Cluster Size: 2).

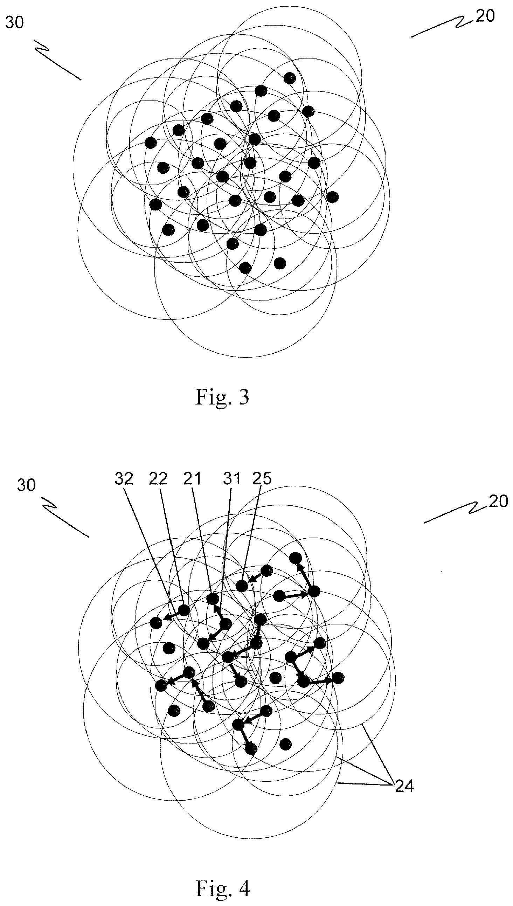

Figur 3 zeigt noch nicht vernetzte Teilnehmer 20 eines zu bildenden Netzwerkes. Den einzelnen Teilnehmern 20 ist jeweils eine Reichweite 24 ihres Bluetooth-Sendemoduls in Form von modellhaften konzentrischen Kreisen zugeordnet. Die Reichweiten 24 sind abhängig von dem jeweiligen Teilnehmer 20 und ggf. dem Ladezustand seiner Energieversorgung unterschiedlich. Jedem Teilnehmer 30 sind eine Teilnehmer-Kennung (Node-ID), eine Netzwerk-Kennung (Network-ID) und eine Cluster-Kennung (Cluster-ID) zugeordnet.

Die Teilnehmer 20 befinden sich in der Phase Discovery 11. Entsprechen senden die Teilnehmer 20 in großer Häufigkeit Kennungs-Daten (Join-Me-Paket). Zwischen dem Senden der Daten empfangen sie Kennungs-Daten von Teilnehmern 20, in deren Reichweite 24 sie sich befinden.

Vorzugsweise ist zumindest ein Großteil der Teilnehmer 20 als Beacons 23 ausgeführt.

Figur 4 zeigt die in Figur 3 gezeigten, zum Teil vernetzten Teilnehmer 20. Einige Teilnehmer 20 haben sich über BLE-Netzwerkverbindungen zu Clustern 30 mit einer Clustergröße (Cluster Size) größer 1 verbunden. Exemplarisch sind ein Cluster A 31 und ein Cluster B 32 markiert. Cluster A 31 ist mit drei verbundenen Teilnehmern 20 größer als Cluster B 32 mit nur zwei Teilnehmer 20. Endseitig des Clusters A 31 ist ein Teilnehmer A 21 angeordnet, während endseitig an Cluster B 32 ein Teilnehmer B 22 verbunden ist. Zusätzlich ist ein weiterer benachbarter Teilnehmer C 25 gekennzeichnet. Die Teilnehmer A 21 und B 22 liegen jeweils in der Reichweite 24 des anderen Teilnehmers A 21, B 22. An Hand der ausgetauschten Kennungs-Daten (Join-Me-Paket) liegt beiden Teilnehmern A 21, B 22 die Information vor, dass Cluster A 31 größer als Cluster B 32 ist. Teilnehmer A 21 kann somit entscheiden, ob sich Teilnehmer B 22 aus Cluster B 32 herauslösen und mit Teilnehmer A 21 eine BLE-Netzwerkverbindung eingehen soll. Entsprechendes gilt für eine mögliche BLE-Netzwerkverbindung zwischen dem Teilnehmer A 21 und dem Teilnehmer C 25. Die Entscheidung, ob und mit welchem der beiden Teilnehmer A 22, C 25 eine Verbindung hergestellt werden soll, trifft Teilnehmer A 21 auf Basis der Bewertungszahl (Connection Score), die er mit Hilfe einer hinterlegten Funktion (Cluster Score Function) aus den von den Teilnehmern B 22, C 25 übermittelten Kennungs-Daten ermittelt hat. Da Teilnehmer B 22 einen freien Eingang 20.4 aufweist, wird eine vergleichsweise hohe Bewertungszahl ermittelt. Diese liegt über der Bewertungszahl des benachbarten Teilnehmers C 25, da dessen Eingang 20.4 belegt ist. Der Teilnehmer A 21 wird somit bevorzugt eine BLE-Netzwerkverbindung mit Teilnehmer B 22 eingehen. Bei der Entscheidung, mit welchem Teilnehmer 20 eine BLE-Netzwerkverbindung eingegangen wird, kann auch die Signalstärke eines empfangenen Sendesignals eines sendenden Teilnehmers 20 berücksichtigt werden. So kann es vorgesehen sein, dass bevorzugt Verbindungen zu Teilnehmern 20 aufgebaut werden, von denen ein starkes Sendesignal vorliegt. Die Stärke eines Sendesignals kann beispielsweise in Form eines Received Signal Strength Index, RSSI, berücksichtigt werden.

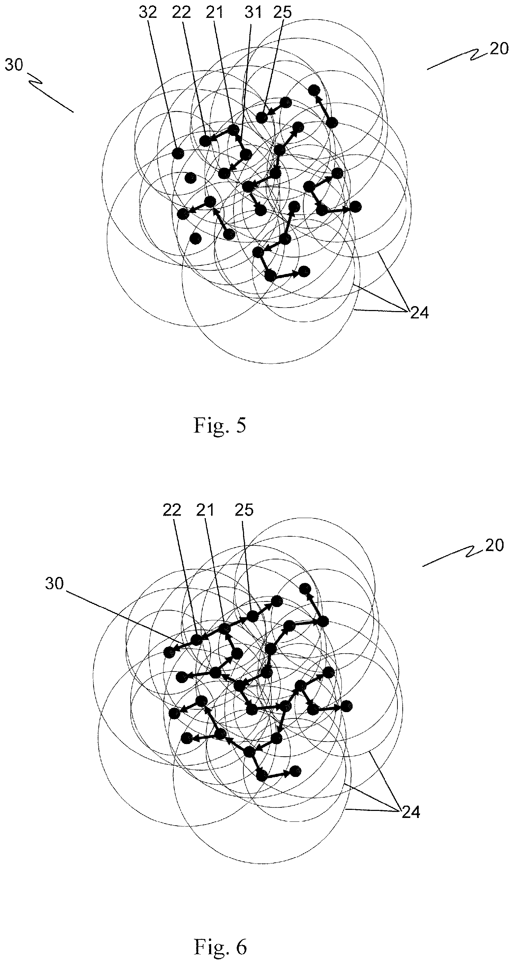

Figur 5 zeigt die in Figur 4 gezeigten, weiter vernetzten Teilnehmer 20. Teilnehmer A 21 hat sich, ausgehend von Figur 4, zum Aufbau einer BLE-Netzwerkverbindung mit Teilnehmer B 22 entschieden. Dazu wurde zunächst die BLE-Netzwerkverbindung des Teilnehmers B 22 zu Cluster B 32 getrennt. Anschließend wurde eine BLE-Netzwerkverbindung zwischen einem Ausgang 20.1, 20.2, 20.3 (siehe Figur 2) des Teilnehmers A 21 und dem Eingang 20.4 des Teilnehmers B 22 aufgebaut.

Da der Eingang 20.4 des Teilnehmers B 22 vor dem Verbindungsaufbau frei war ist es alternativ auch möglich, dass Teilnehmer A 21 Teilnehmer B 22 vor dem Verbindungsaufbau nicht aus dem Cluster B 32 herauslöst. Stattdessen kann Teilnehmer A 21 direkt eine Verbindung zu Teilnehmer B 22 aufbauen, bei der Teilnehmer A 21 als Master und Teilnehmer B 22 als Slave geschaltet ist. Auf diese Weise kann das gesamte kleinere Cluster B 32 an das größere Cluster A 31 angekoppelt werden.

Figur 6 zeigt ein Netzwerk mit den vollständig vernetzten Teilnehmern 20 aus Figur 5. Teilnehmer A 21 ist dazu eine BLE-Netzwerkverbindung mit Teilnehmer C 25 eingegangen. Vor dem Verbindungsaufbau war der Eingang 20.4 des Teilnehmers C 25 belegt. Daher wurde der Teilnehmer C 25 zunächst aus seinem ursprünglichen Cluster 30 herausgelöst und dann mit Teilnehmer A 21 verbunden. Das Verfahren ermöglicht es so, dass Teilnehmer 20, deren Eingänge 20.4 bereits belegt sind, von kleineren in größere Cluster 30 überführt werden können.

Alle Teilnehmer 20 gehören nach Figur 6 einem Cluster 30 an und weisen demnach die gleiche Cluster-Kennung (Cluster-ID) auf. Die Teilnehmer 20 schalten daraufhin auf einen Modus (lower discovery mode), bei dem seltener Advertising Pakete gesendet werden und seltener nach Advertising Paketen gesucht wird. Dadurch kann der Energieverbrauch der Teilnehmer 20 deutlich reduziert werden.

Das gebildete Mesh-Netzwerk benötigt keinen Koordinator oder zentralen Master, sondern kann aus gleichartigen Teilnehmern 20 aufgebaut werden. So kann beispielsweise ein Netzwerk mit einer Vielzahl an Teilnehmern 20 mit geringer Akku- oder Batteriekapazität, beispielsweise mit Beacons, aufgebaut werden. Diese vernetzen sich selbstständig. Die Verbindung zwischen den Teilnehmern 20 erfolgt auf einem Bluetooth Low Energy Standard, vorzugsweise entsprechend der Bluetooth 4.1 Spezifikation. Um die Netzwerkfähigkeit zu erreichen, werden die Teilnehmer 20 mit einer entsprechenden Applikationssoftware programmiert. Diese steuert die beschriebenen Phasen des Verbindungsaufbaus und der Aufrechterhaltung des Netzwerkes.

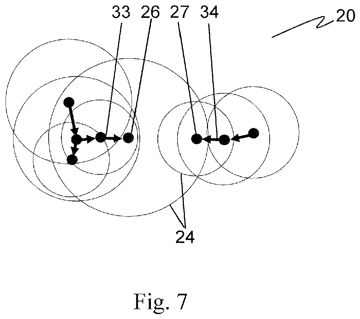

Figur 7 zeigt zwei unterschiedlich große Cluster D 33, E 34 während des Aufbaus eines Netzwerkes. Dabei weist Cluster D 33 vier und Cluster E 34 drei Teilnehmer 20 auf. Ein endseitig angeordneter Teilnehmer E 27 des kleineren Clusters E 34 liegt in der Reichweite 24 eines endseitigen Teilnehmers D 26 des größeren Clusters D 33. Umgekehrt erreicht der Teilnehmer E 27 des kleineren Clusters E 34 mit seiner Reichweite 24 nicht den Teilnehmer D 26 des größeren Clusters D 33. Bei beiden endseitigen Teilnehmern D 26, E 27 ist der Eingang 20.4 belegt. In einem solchen Fall besteht die Möglichkeit, dass der Teilnehmer D 26 des größeren Clusters D 33 den Teilnehmer E 27 des kleineren Clusters E 34 aus dessen Cluster E 34 herauslöst, ohne dass anschließend eine BLE-Netzwerkverbindung zwischen den beiden Teilnehmern 20 aufgebaut werden kann, da die Reichweite des Teilnehmers E 27 dazu zu gering ist. Dies führt dann dazu, dass der Teilnehmer E 27 mit der geringen Reichweite 24 dauerhaft nicht verbunden ist und nach Verbindungsmöglichkeiten sucht. Der Zustand einer geringen Such- und Sendehäufigkeit kann so auch für die benachbarten Teilnehmer 20 nicht erreicht werden, was zu einem hohen Energieverbrauch führt.

Um dies zu vermeiden, ist es vorzugsweise vorgesehen, ein ACK Feld zu den Kennungs-Daten (Join-Me Paket) hinzuzufügen, welches die Teilnehmer-Kennung (Node-ID) enthält. Teilnehmer D 26 kann diesem ACK Feld die Teilnehmer-Kennung von Teilnehmer E 27 zuweisen. Diese ist Teilnehmer D 26 nur bekannt, wenn er vorher Kennungs-Daten (Join-Me Paket) von Teilnehmer E 27 empfangen hat und somit in Reichweite 24 von Teilnehmer E 27 liegt. Ein Teilnehmer 20 wird demnach nur von einem weiteren Teilnehmer 20 aus einem Cluster 30 herausgelöst, wenn beide Teilnehmer 20 in der Reichweite 24 des anderen Teilnehmers 20 liegen.

## Patentansprüche

1. Verfahren zum Aufbau und zur Aufrechterhaltung eines Netzwerkes mit zwei oder mehreren elektronischen Teilnehmern (20, 21, 22, 25, 26, 27), basierend auf Funk-Verbindungen zwischen den Teilnehmern (20, 21, 22, 25, 26, 27), wobei jeder Teilnehmer (20, 21, 22, 25, 26, 27) über eine Teilnehmer-Kennung eindeutig **gekennzeichnet ist,**
**dadurch** gekennzeichnet,
dass Cluster (30, 31, 32, 33, 34) mit mehreren mittels Bluetooth Low Energy, BLE, Verbindungen verbundenen Teilnehmern (20, 21, 22, 25, 26, 27) gebildet werden, dass jedem Cluster (30, 31, 32, 33, 34) eine eindeutige Cluster-Kennung zugeordnet wird, dass ein erster Teilnehmer (20, 21, 22, 25, 26, 27) eines ersten Clusters (30, 31, 32, 33, 34) einen in Reichweite einer BLE-Verbindung befindlichen zweiten Teilnehmer (20, 21, 22, 25, 26, 27) aus einem kleineren oder gleich großen zweiten Cluster (30, 31, 32, 33, 34) auswählt und veranlasst, dass dieser aus dem zweiten Cluster (30, 31, 32, 33, 34) herausgelöst wird, indem der zweite Teilnehmer seine BLE-Verbindungen zu Teilnehmern des zweiten Clusters unterbricht, und durch den Aufbau einer BLE-Verbindung mit dem ersten Teilnehmer (20, 21, 22, 25, 26, 27) in das erste Cluster (30, 31, 32, 33, 34) integriert wird.

2. Verfahren nach Anspruch 1,
**dadurch gekennzeichnet,**
**dass** vor Aufbau einer BLE-Verbindung Kennungs-Daten zwischen Teilnehmern (20, 21, 22, 25, 26, 27) vorliegender Cluster (30, 31, 32, 33, 34) versendet werden, dass die Kennungs-Daten zumindest die Teilnehmer-Kennung und/oder die Anzahl freier Eingänge (20.1, 20.2, 20.3) und/oder die Anzahl freier Ausgänge (20.4) eines jeweiligen Teilnehmers und/oder die Cluster-Kennung und/oder eine Clustergröße des Clusters, dem der jeweilige Teilnehmer (20, 21, 22, 25, 26, 27) zugehört, enthalten, dass empfangende Teilnehmer (20, 21, 22, 25, 26, 27) aus den von verschiedenen Teilnehmern (20, 21, 22, 25, 26, 27) zugesandten Kennungs-Daten für jeden dieser Teilnehmer (20, 21, 22, 25, 26, 27) eine Bewertungszahl bestimmen und dass ein Teilnehmer (20, 21, 22, 25, 26, 27) eines größeren Clusters (30, 31, 32, 33, 34) auf Basis der Bewertungszahl einen Teilnehmer (20, 21, 22, 25, 26, 27) eines kleineren Clusters (30, 31, 32, 33, 34) zum Aufbau einer BLE-Verbindung auswählt oder dass bei gleich großen Clustern in Abhängigkeit von der jeweiligen Cluster-Kennung und/oder der jeweiligen Teilnehmer-Kennung ein Teilnehmer (20, 21, 22, 25, 26, 27) festgelegt wird, der auf Basis der Bewertungszahl einen zweiten Teilnehmer (20, 21, 22, 25, 26, 27) zum Aufbau der BLE-Verbindung auswählt.

3. Verfahren nach Anspruch 2,
**dadurch gekennzeichnet,**
**dass** während einer Auffindungs-Phase des Netzwerkaufbaus die Teilnehmer (20, 21, 22, 25, 26, 27) fortwährend Verbindungsdaten mit ihren Kennungs-Daten senden und Verbindungsdaten mit Kennungs-Daten von sendenden Teilnehmer (20, 21, 22, 25, 26, 27) empfangen, dass empfangende Teilnehmer (20, 21, 22, 25, 26, 27) die jeweils zuletzt empfangenen Kennungs-Daten der sendenden Teilnehmer (20, 21, 22, 25, 26, 27) speichern und
**dass** die Häufigkeit der Aussendung von Verbindungsdaten und/oder der Suche nach zu empfangenden Verbindungsdaten reduziert oder beendet wird, wenn die empfangenen Kennungs-Daten alle die gleiche Cluster-Kennung aufweisen.

4. Verfahren nach einem der Ansprüche 1 bis 3,
**dadurch gekennzeichnet,**
**dass** zumindest ein Beacon (23) als Teilnehmer (20, 21, 22, 25, 26, 27) verwendet wird.

5. Elektronischer Teilnehmer (20, 21, 22, 25, 26, 27) eines Netzwerkes mit zwei oder mehreren elektronischen Teilnehmern (20, 21, 22, 25, 26, 27), basierend auf Funk-Verbindungen zwischen den Teilnehmern (20, 21, 22, 25, 26, 27), wobei der Teilnehmer (20, 21, 22, 25, 26, 27) einen Mikro-Prozessor und eine Funk-Schnittstelle aufweist, die dazu ausgelegt ist, die Funk-Verbindung zu mindestens einem weiteren Teilnehmer (20, 21, 22, 25, 26, 27) aufzubauen, wobei der Teilnehmer (20, 21, 22, 25, 26, 27) und der mindestens eine weitere Teilnehmer (20, 21, 22, 25, 26, 27) jeweils über eine Teilnehmer-Kennung eindeutig **gekennzeichnet sind,**
**dadurch** gekennzeichnet,
dass die Funk-Verbindungen Bluetooth Low Energy, BLE, Verbindungen sind, dass der Teilnehmer (20, 21, 22, 25, 26, 27) Teil eines ersten Clusters (30, 31, 32, 33, 34) ist, dass mehrere mittels BLE-Verbindungen verbundene weitere Teilnehmer (20, 21, 22, 25, 26, 27) Teil eines kleineren oder gleich großen zweiten Clusters (30, 31, 32, 33, 34) sind, dass jedem Cluster (30, 31, 32, 33, 34) eine eindeutige Cluster-Kennung zugeordnet ist, dass der Teilnehmer (20, 21, 22, 25, 26, 27) des ersten Clusters (30, 31, 32, 33, 34) ausgebildet ist, einen in Reichweite einer BLE-Verbindung befindlichen weiteren Teilnehmer (20, 21, 22, 25, 26, 27) aus dem zweiten Cluster (30, 31, 32, 33, 34) auszuwählen und zu veranlassen, diesen aus dem zweiten Cluster (30, 31, 32, 33, 34) herauszulösen, indem dieser seine BLE-Verbindungen zu Teilnehmern (20, 21, 22, 25, 26, 27) des zweiten Clusters (30, 31, 32, 33, 34) unterbricht, und diesen in das erste Cluster (30, 31, 32, 33, 34) zu integrieren, indem der Teilnehmer (20, 21, 22, 25, 26, 27) eine BLE-Verbindung zu dem weiteren Teilnehmer (20, 21, 22, 25, 26, 27) aufbaut.

6. Elektronischer Teilnehmer (20, 21, 22, 25, 26, 27) nach Anspruch 5,
**dadurch gekennzeichnet,**
**dass** der Teilnehmer (20, 21, 22, 25, 26, 27) als ein Beacon (23), insbesondere ein batterie- oder akkubetriebener Beacon, ausgebildet ist.

7. Elektronischer Teilnehmer (20, 21, 22, 25, 26, 27) nach Anspruch 6,
**dadurch gekennzeichnet,**
**dass** der Beacon (23) dazu ausgelegt ist, über die BLE-Verbindung Verbindungsdaten auszusenden und nach über die BLE-Verbindung gesendeten Verbindungsdaten weiterer Teilnehmer (20, 21, 22, 25, 26, 27) zu suchen, dass der Beacon (23) dazu ausgebildet ist, mit den weiteren Teilnehmern (20, 21, 22, 25, 26, 27) mittels BLE-Verbindungen ein Netzwerk aufzubauen und dass der Beacon (23) dazu ausgebildet ist, die Häufigkeit der Aussendung von Verbindungsdaten und/oder der Suche nach Verbindungsdaten zu reduzieren oder die Aussendung von Verbindungsdaten und/oder die Suche nach Verbindungsdaten einzustellen, wenn die in Reichweite (24) einer bidirektionalen BLE-Verbindung befindlichen weiteren Teilnehmer (20, 21, 22, 25, 26, 27) in dem Netzwerk integriert sind.

8. Elektronischer Teilnehmer (20, 21, 22, 25, 26, 27) nach Anspruch 6 oder 7,
**dadurch gekennzeichnet,**
**dass** in dem Beacon (23) eine eindeutige Teilnehmer-Kennung und/oder eine eindeutige Cluster-Kennung und/oder eine eindeutige Netzwerk-Kennung und/oder eine Clustergröße des Clusters, dem der Beacon (23) zugehört, und/oder die Anzahl der Teilnehmer (20, 21, 22, 25, 26, 27) in einem Ast des Netzwerkes, der mit einem jeweiligen Eingang (20.1, 20.2, 20.3) oder Ausgang (20.4) des Beacons (23) verbunden ist, gespeichert ist.

9. Elektronischer Teilnehmer (20, 21, 22, 25, 26, 27) nach Anspruch 8,
**dadurch gekennzeichnet,**
**dass** der Beacon (23) dazu ausgelegt ist, als Verbindungsdaten oder als Teil der Verbindungsdaten Kennungs-Daten an in Reichweite einer BLE-Verbindung befindliche weitere Teilnehmer (20, 21, 22, 25, 26, 27) zu versenden und Kennungs-Daten von diesen zu empfangen und dass die Kennungs-Daten zumindest die Teilnehmer-Kennung und/oder die Anzahl freier Eingänge (20.1, 20.2, 20.3) und/oder die Anzahl freier Ausgänge (20.4) des Beacons (23) und/oder die Cluster-Kennung und/oder die Clustergröße des Clusters, dem der Beacon (23) oder der weitere Teilnehmer (20, 21, 22, 25, 26, 27) zugehört, enthalten.

10. Elektronischer Teilnehmer (20, 21, 22, 25, 26, 27) nach Anspruch 9,
**dadurch gekennzeichnet,**
**dass** der Beacon (23) dazu ausgelegt ist, aus den empfangenden Kennungs-Daten mit Hilfe einer in dem Beacon (23) hinterlegten Funktion für jeden der Teilnehmer (20, 21, 22, 25, 26, 27), dessen Kennungs-Daten von dem Beacon (23) empfangen wurden, eine Bewertungszahl zu bestimmen, und dass der Beacon (23) dazu ausgelegt ist, an Hand der Bewertungszahl einen Teilnehmer (20, 21, 22, 25, 26, 27) zur Integration in das erste Cluster (30, 31, 32, 33, 34) und zum Aufbau einer BLE-Verbindung auszuwählen.

## Claims

1. Method for establishing and maintaining a network having two or more electronic subscribers (20, 21, 22, 25, 26, 27), based on radio connections between the subscribers (20, 21, 22, 25, 26, 27), each subscriber (20, 21, 22, 25, 26, 27) being uniquely **characterized by** way of a subscriber identifier,
**characterized in that**
clusters (30, 31, 32, 33, 34) having a plurality of subscribers (20, 21, 22, 25, 26, 27) connected by means of Bluetooth Low Energy, BLE, connections are formed, **in that** a unique cluster identifier is allocated to each cluster (30, 31, 32, 33, 34), **in that** a first subscriber (20, 21, 22, 25, 26, 27) of a first cluster (30, 31, 32, 33, 34) selects a second subscriber (20, 21, 22, 25, 26, 27), which is within range of a BLE connection, from a smaller or equally large second cluster (30, 31, 32, 33, 34), 27) and causes it to be detached from the second cluster (30, 31, 32, 33, 34) by the second subscriber interrupting its BLE connections to subscribers of the second cluster and to be integrated into the first cluster (30, 31, 32, 33, 34) by establishing a BLE connection with the first subscriber (20, 21, 22, 25, 26, 27).

2. Method according to claim 1,
**characterized in that**
before a BLE connection is established, identifier data are transmitted between subscribers (20, 21, 22, 25, 26, 27) of available clusters (30, 31, 32, 33, 34), **in that** the identifier data contain at least the subscriber identifier and/or the number of unoccupied inputs (20.1, 20.2, 20.3) and/or the number of unoccupied outputs (20.4) of a respective subscriber and/or the cluster identifier and/or a cluster size of the cluster to which the respective subscriber (20, 21, 22, 25, 26, 27) belongs, **in that** receiving subscribers (20, 21, 22, 25, 26, 27) determine an evaluation number for each of those subscribers (20, 21, 22, 25, 26, 27) from the identifier data sent from various subscribers (20, 21, 22, 25, 26, 27), and **in that** a subscriber (20, 21, 22, 25, 26, 27) of a larger cluster (30, 31, 32, 33, 34) selects a subscriber (20, 21, 22, 25, 26, 27) of a smaller cluster (30, 31, 32, 33, 34) for establishing a BLE connection on the basis of the evaluation number, or **in that**, in the case of clusters of the same size, a subscriber (20, 21, 22, 25, 26, 27) is defined, as a function of the respective cluster identifier and/or the respective subscriber identifier, which subscriber selects a second subscriber (20, 21, 22, 25, 26, 27) for establishing the BLE connection on the basis of the evaluation number.

3. Method according to claim 2,
**characterized in that**
during a discovery phase of the network establishment, the subscribers (20, 21, 22, 25, 26, 27) continuously transmit connection data having their identifier data and receive connection data with identifier data from transmitting subscribers (20, 21, 22, 25, 26, 27), **in that** receiving subscribers (20, 21, 22, 25, 26, 27) store the identifier data of the transmitting subscribers (20, 21, 22, 25, 26, 27) received most recently in each case, and
**in that** the frequency of transmission of connection data and/or the search for connection data to be received is reduced or terminated if the received identifier data all have the same cluster identifier.

4. A method according to any one of claims 1 to 3,
**characterized in that**
at least one beacon (23) is used as a subscriber (20, 21, 22, 25, 26, 27).

5. Electronic subscriber (20, 21, 22, 25, 26, 27) of a network comprising two or more electronic subscribers (20, 21, 22, 25, 26, 27) based on radio connections between the subscribers (20, 21, 22, 25, 26, 27), wherein the subscriber (20, 21, 22, 25, 26, 27) comprises a microprocessor and a radio interface which is designed to establish the radio connection to at least one further subscriber (20, 21, 22, 25, 26, 27), the subscriber (20, 21, 22, 25, 26, 27) and the at least one further subscriber (20, 21, 22, 25, 26, 27) each being uniquely identified by means of a subscriber identifier,
**characterized in that**
the radio connections are Bluetooth Low Energy, BLE, connections, **in that** the subscriber (20, 21, 22, 25, 26, 27) is part of a first cluster (30, 31, 32, 33, 34), **in that** a plurality of further subscribers (20, 21, 22, 25, 26, 27) connected by means of BLE connections are part of a smaller or equally large second cluster (30, 31, 32, 33, 34), **in that** a unique cluster identifier is allocated to each cluster (30, 31, 32, 33, 34), **in that** the subscriber (20, 21, 22, 25, 26, 27) of the first cluster (30, 31, 32, 33, 34) is designed to identify a further subscriber (20, 21, 22, 25, 26, 27), located within range of a BLE connection, 21, 22, 25, 26, 27), from the second cluster (30, 31, 32, 33, 34), and to cause this subscriber to be detached from the second cluster (30, 31, 32, 33, 34) by the latter interrupting its BLE connections to subscribers (20, 21, 22, 25, 26, 27) of the second cluster (30, 31, 32, 33, 34), 27) and to integrate it into the first cluster (30, 31, 32, 33, 34) by the subscriber (20, 21, 22, 25, 26, 27) establishing a BLE connection to the further subscriber (20, 21, 22, 25, 26, 27).

6. Electronic subscriber (20, 21, 22, 25, 26, 27) according to claim 5,
**characterized in that**
the subscriber (20, 21, 22, 25, 26, 27) is designed as a beacon (23), in particular a battery- or accumulator-powered beacon.

7. Electronic subscriber (20, 21, 22, 25, 26, 27) according to claim 6,
**characterized in that**
the beacon (23) is designed to transmit connection data via the BLE connection and to search for connection data of further subscribers (20, 21, 22, 25, 26, 27) transmitted via the BLE connection, **in that** the beacon (23) is designed to establish a network with the further subscribers (20, 21, 22, 25, 26, 27) by means of BLE connections, and **in that** the beacon (23) is designed to reduce the frequency of the transmission of connection data and/or the search for connection data or to stop the transmission of connection data and/or the search for connection data if the further subscribers (20, 21, 22, 25, 26, 27) located within range (24) of a bidirectional BLE connection are integrated in the network.

8. Electronic subscriber (20, 21, 22, 25, 26, 27) according to claim 6 or 7,
**characterized in that**
a unique subscriber identifier and/or a unique cluster identifier and/or a unique network identifier and/or a cluster size of the cluster, to which the beacon (23) belongs and/or the number of subscribers (20, 21, 22, 25, 26, 27) in a branch of the network connected to a respective input (20.1, 20.2, 20.3) or output (20.4) of the beacon (23) is stored in the beacon (23).

9. Electronic subscriber (20, 21, 22, 25, 26, 27) according to claim 8,
**characterized in**
**in that** the beacon (23) is designed to send identifier data as connection data or as part of the connection data to further subscribers (20, 21, 22, 25, 26, 27) located within range of a BLE connection and to receive identifier data from them, and **in that** the identifier data comprises at least the subscriber identifier and/or the number of free inputs (20. 1, 20.2, 20.3) and/or the number of free outputs (20.4) of the beacon (23) and/or the cluster identifier and/or the cluster size of the cluster to which the beacon (23) or the further subscriber (20, 21, 22, 25, 26, 27) belongs.

10. Electronic subscriber (20, 21, 22, 25, 26, 27) according to claim 9,
**characterized in**
**in that** the beacon (23) is designed to determine, with the aid of a function stored in the beacon (23), an evaluation number from the received identifier data for each of the subscribers (20, 21, 22, 25, 26, 27) whose identifier data has been received by the beacon (23), and that the beacon (23) is designed to select a subscriber (20, 21, 22, 25, 26, 27) for integration into the first cluster (30, 31, 32, 33, 34) and for the establishment of a BLE connection on the basis of the evaluation number.

## Revendications

1. Procédé de mise en place et de maintenance d'un réseau avec deux ou plusieurs abonnés électroniques (20, 21, 22, 25, 26, 27), basé sur des connexions radio entre les abonnés (20, 21, 22, 25, 26, 27), chaque abonné (20, 21, 22, 25, 26, 27) étant identifié de manière unique par un identifiant d'abonné,
**caractérisé en ce que**
des clusters (30, 31, 32, 33, 34) sont formés avec une pluralité d'abonnés (20, 21, 22, 25, 26, 27) connectés au moyen de connexions Bluetooth Low Energy, BLE, **en ce qu'**un identificateur de cluster unique est attribué à chaque cluster (30, 31, 32, 33, 34), **en ce qu'**un premier abonné (20, 21, 22, 25, 26, 27) d'un premier cluster (30, 31, 32, 33, 34) sélectionne un deuxième abonné (20, 21, 22, 25, 26, 27), qui se trouve à portée d'une connexion BLE, dans un cluster plus petit ou de même taille (30, 31, 32, 33, 34), 27) à portée d'une connexion BLE, d'un second cluster (30, 31, 32, 33, 34) plus petit ou de même taille et provoquant le détachement de ce dernier du second cluster (30, 31, 32, 33, 34) par le second abonné qui interrompt ses connexions BLE avec les abonnés du second cluster, et son intégration dans le premier cluster (30, 31, 32, 33, 34) par l'établissement d'une connexion BLE avec le premier abonné (20, 21, 22, 25, 26, 27).

2. Méthode selon la revendication 1,
**caractérisé en ce que**
**en ce que**, avant l'établissement d'une connexion BLE, des données d'identification sont transmises entre les abonnés (20, 21, 22, 25, 26, 27) des clusters (30, 31, 32, 33, 34) qui sont présents, **en ce que** les données d'identification contiennent au moins l'identifiant de l'abonné et/ou le nombre d'entrées libres (20.1, 20.2, 20.3) et/ou le nombre de sorties libres (20. 4) d'un abonné respectif et/ou l'identifiant du cluster et/ou une taille de cluster du cluster auquel l'abonné respectif (20, 21, 22, 25, 26, 27) appartient, **en ce que** les abonnés récepteurs (20, 21, 22, 25, 26, 27) déterminent un numéro d'évaluation pour chacun de ces abonnés (20, 21, 22, 25, 26, 27) à partir des données d'identification envoyées par différents abonnés (20, 21, 22, 25, 26, 27), et **en ce qu'**un abonné (20, 21, 22, 25, 26, 27) d'un cluster plus grand (30, 31, 32, 33, 34) sélectionne, sur la base du numéro d'évaluation, un abonné (20, 21, 22, 25, 26, 27) d'un cluster (30, 31, 32, 33, 34) plus petit ou de même taille pour établir une connexion BLE, on détermine, en fonction de l'identificateur de cluster respectif et/ou de l'identificateur d'abonné respectif, un abonné (20, 21, 22, 25, 26, 27) qui sélectionne un deuxième abonné (20, 21, 22, 25, 26, 27) pour établir la connexion BLE sur la base du numéro d'évaluation.

3. Méthode selon la revendication 2,
**caractérisé en ce que**
pendant une phase de découverte de la configuration du réseau, les abonnés (20, 21, 22, 25, 26, 27) transmettent en permanence des données de connexion avec leurs données d'identification et reçoivent des données de connexion avec les données d'identification des abonnés émetteurs (20, 21, 22, 25, 26, 27), que les abonnés récepteurs (20, 21, 22, 25, 26, 27) stockent les données d'identification des abonnés émetteurs (20, 21, 22, 25, 26, 27) reçues en dernier dans chaque cas, et
**en ce que** la fréquence de transmission des données de connexion et/ou la recherche des données de connexion à recevoir est réduite ou interrompue si les données d'identification reçues ont toutes le même identifiant de cluster.

4. Une méthode selon l'une des revendications 1 à 3,
caractérisé en que
au moins un beacon (23) est utilisée comme abonné (20, 21, 22, 25, 26, 27).

5. Abonné électronique (20, 21, 22, 25, 26, 27) d'un réseau comprenant deux ou plusieurs abonnés électroniques (20, 21, 22, 25, 26, 27) basé sur des connexions radio entre les abonnés (20, 21, 22, 25, 26, 27), dans lequel l'abonné (20, 21, 22, 25, 26, 27) comprend un microprocesseur et une interface radio qui est destiné à établir la connexion radio avec au moins un autre abonné (20, 21, 22, 25, 26, 27), l'abonné (20, 21, 22, 25, 26, 27) et le au moins un autre abonné (20, 21, 22, 25, 26, 27) étant chacun identifié de manière unique au moyen d'un identifiant d'abonné,
**caractérisé en ce que**
les connexions radio sont des connexions Bluetooth Low Energy, BLE, **en ce que** l'abonné (20, 21, 22, 25, 26, 27) fait partie d'un premier cluster (30, 31, 32, 33, 34), **en ce que** plusieurs autres abonnés (20, 21, 22, 25, 26, 27) connectés au moyen de connexions BLE font partie d'un deuxième cluster (30, 31, 32, 33, 34) plus petit ou de même taille, **en ce qu'**un identificateur de cluster unique est attribué à chaque cluster (30, 31, 32, 33, 34), **en ce que** l'abonné (20, 21, 22, 25, 26, 27) du premier cluster (30, 31, 32, 33, 34) est conçu pour identifier un autre abonné (20, 21, 22, 25, 26, 27) à portée d'une connexion BLE du deuxième cluster (30, 31, 32, 33, 34) et de faire en sorte que l'abonné se déconnecte du deuxième cluster (30, 31, 32, 33, 34) en mettant fin à ses connexions BLE aux abonnés (20, 21, 22, 25, 26, 27) du deuxième cluster (30, 31, 32, 33, 34), 27) du deuxième cluster (30, 31, 32, 33, 34) et de l'intégrer dans le premier cluster (30, 31, 32, 33, 34) par l'abonné (20, 21, 22, 25, 26, 27) établissant une connexion BLE avec l'autre abonné (20, 21, 22, 25, 26, 27).

6. Abonné électronique (20, 21, 22, 25, 26, 27) selon la revendication 5,
caractérisé en que
l'abonné (20, 21, 22, 25, 26, 27) est conçu comme un beacon (23), en particulier un beacon alimentée par une batterie ou un accumulateur.

7. Abonné électronique (20, 21, 22, 25, 26, 27) selon la revendication 6,
**caractérisé en ce que**
le beacon (23) est conçue pour transmettre des données de connexion via la connexion BLE et pour rechercher les données de connexion d'autres abonnés (20, 21, 22, 25, 26, 27) transmises via la connexion BLE, **en ce que** le beacon (23) est conçue pour établir un réseau avec les autres abonnés (20, 21, 22, 25, 26, 27) au moyen de connexions BLE, et **en ce que** le beacon (23) est conçue pour de réduire la fréquence de la transmission des données de connexion et/ou de la recherche de données de connexion ou d'arrêter la transmission des données de connexion et/ou la recherche de données de connexion lorsque les autres abonnés (20, 21, 22, 25, 26, 27) situés à portée (24) d'une connexion BLE bidirectionnelle sont intégrés dans le réseau.

8. Abonné électronique (20, 21, 22, 25, 26, 27) selon la revendication 6 ou 7,
caractérisé en que
dans le beacon (23) est stocké un identifiant unique d'abonné et/ou un identifiant unique de cluster et/ou un identifiant unique de réseau et/ou une taille de cluster de le cluster à lequel le beacon (23) appartient et/ou le nombre d'abonnés (20, 21, 22, 25, 26, 27) dans une branche du réseau connectée à une entrée (20.1, 20.2, 20.3) ou une sortie (20.4) respective de le beacon (23).

9. Abonné électronique (20, 21, 22, 25, 26, 27) selon la revendication 8,
caractérisé en que
le beacon (23) est conçue pour envoyer des données d'identification comme données de connexion ou comme partie des données de connexion à d'autres abonnés (20, 21, 22, 25, 26, 27) situés à portée d'une connexion BLE et pour recevoir des données d'identification de leur part, et en ce que les données d'identification comprennent au moins l'identifiant de l'abonné et/ou le nombre d'entrées libres (20. 1, 20.2, 20.3) et/ou le nombre de sorties libres (20.4) de le beacon (23) et/ou l'identifiant de cluster et/ou la taille de le cluster à lequel le beacon (23) ou l'autre abonné (20, 21, 22, 25, 26, 27) appartient.

10. Abonné électronique (20, 21, 22, 25, 26, 27) selon la revendication 9,
caractérisé en que
le beacon (23) est conçue pour déterminer, à partir des données d'identification reçues, à l'aide d'une fonction stockée dans le beacon (23), pour chacun des abonnés (20, 21, 22, 25, 26, 27) dont les données d'identification ont été reçues par le beacon (23) et en ce que le beacon (23) est destinée à sélectionner, sur la base du numéro d'évaluation, un abonné (20, 21, 22, 25, 26, 27) pour l'intégration dans le premier cluster (30, 31, 32, 33, 34) et pour l'établissement d'une connexion BLE.
